# EUROPEAN PATENT APPLICATION

(11) **EP 2 202 499 A2**
(43) Date of publication of application: **30.06.2010**
(21) Application number: 09180831.1
(22) Date of filing: 29.12.2009
(51) Int. Cl.: G01L 3/10

(54) **Torque sensor device**

(30) Priority: 29.12.2008 US 141060 P; 29.12.2008 EP 08173037
(71) Applicant: NCTEngineering GmbH, 82008 Unterhaching (DE)
(72) Inventor: May, Lutz, 82335, Berg (DE)
(74) Representative: Maiwald Patentanwalts GmbH

(57) **Abstract**

The invention relates to a sensor device for measuring a torque of an elongated object. The sensor device comprises a first coil, a first resistor, a power source and an evaluation unit. The first coil comprises a first coil terminal and a second coil terminal. The first resistor comprises a first resistor terminal and a second resistor terminal. The power source comprises a first power source terminal and a second power source terminal. The evaluation unit comprises a first evaluation unit terminal and a second evaluation unit terminal. The first coil is adapted to incorporate the elongated object. The first coil terminal is connected with the first resistor terminal. The second coil terminal is connected with the first power source terminal. The second resistor terminal is connected with the first power source terminal. The first evaluation unit terminal is connected with the first resistor terminal. The second evaluation unit terminal is connected with the second resistor terminal. The evaluation unit is adapted to measure an absorbed energy at the first resistor, which absorbed energy is depending on the torque of an elongated object.

## Description

### REFERENCE TO RELATED APPLICATIONS

This application claims the benefit of the filing date of European Patent Application No. EP 08 173 037.6 filed 29 December 2008, the disclosure of which is hereby incorporated herein by reference and of United States Provisional Patent Application No. 61/141,060 filed 29 December 2008, the disclosure of which is hereby incorporated by reference.

### FIELD OF THE INVENTION

The invention relates to a sensor device for measuring a torque of an elongated object. The invention further relates to a shaft arrangement and a method for measuring a torque of an elongated object.

### BACKGROUND OF THE INVENTION

Torque measurement may be provided for determining a torque of an elongated object which is stressed by a force. A torque may be present at an elongated object and may be monitored in order to control an industrial process, an engine and/or a critical limit of a mechanical stress. Often harsh operation conditions are present. These harsh operation conditions may be caused by environmental factors such as humidity, oil dust and/or changing temperatures, which all may influence the measurement results of the torque measurement.

### SUMMARY OF THE INVENTION

There may be a need to provide an improved sensor device for measuring a torque of an object.

The object of the present invention is solved by a device and a method according to the subject matter of the independent claims. Further embodiments are incorporated in the dependent claims.

It should be noted that the following described exemplary embodiments of the invention apply also for the device and the method, as well as a program element and a computer readable medium having implemented the method.

According to an exemplary embodiment of the invention there is provided a sensor device for measuring a torque of an elongated object. The sensor device may comprise a first coil, a first resistor, a power source and an evaluation unit. The first coil may comprise a first coil terminal and a second coil terminal. The first resistor may comprise a first resistor terminal and a second resistor terminal. The power source may comprise a first power source terminal and a second power source terminal. The evaluation unit may comprise a first evaluation unit terminal and a second evaluation unit terminal. The first coil may be adapted to incorporate an elongated object. The first coil terminal may be connected with the first resistor terminal. The second coil terminal may be connected with the second power source terminal. The second resistor terminal may be connected with the first power source terminal. The first evaluation unit terminal may be connected with the first resistor terminal. The second evaluation unit terminal may be connected with the second resistor terminal. The evaluation unit may be adapted to measure an absorbed energy at the first resistor, which absorbed energy may be depending on the torque of an elongated object.

The term "incorporate or incorporation" may mean to surround the elongated object as well as to be positioned aside the elongated object. For example a coil with three dimensional windings may incorporate the elongated object by surrounding the elongated object with the windings of the coil. In an other example a coil with three dimensional windings may incorporate the elongated object by being mounted aside the elongated object, i.e. in the proximity of the elongated object but not surrounding the elongated object with the three dimensional windings of the coil.

The operational principles of an absorption sensor, in particular a torque sensor based on the absorption principle, may be based on a magnetic distortion to a magnetic field, i.e. an alternating magnetic field, which may be homogeneous. The magnetic distortion may be caused by an object that can "absorb" magnetic energy. The object may be an elongated object, such as a shaft, which may absorb an alternating magnetic energy. The first coil may be influenced in impedance by an elongated object.

The electro-magnetic energy may be produced actively by an electronic circuit and one or a plurality of coils. The object to be monitored may have the ability or property to interact with the electro-magnetic energy in such way that the object to be monitored may partially "consume" the electro-magnetic energy.

Through comparison and/or a mathematical computation of measurements taken from one or more magnetic sensors, the torque of the magnetic energy "absorbing" object may be measured. The magnetic sensors or torque sensors may be placed at the same location where the magnetic field may be generated. Furthermore, a coil of the torque sensor may generate the magnetic field and a resistor connected with the coil may measure the absorbed energy.

The "consumed" electro-magnetic energy may be used for different purposes as long as the amount of consumed electro-magnetic energy may be identical and/or repeatable under the same circumstances between the coil and the elongated object.

The emitter of electro-magnetic energy, i.e. of alternating electro-magnetic energy may be called in this context "Transmitter-Pad" or "T-Pad". The magnetic field sensor device may be called in this context "Receiver-Pad" or "R-Pad". When the Transmitter and the Receiver are incorporated into the same component or module then it may be called a "TR-Pad" or "TR". The object that has the ability to absorb magnetic energy may be called in this context "Reference Device" or "RD".

There may be different designs for an Absorption-D sensor circuit, i.e. an "Indirect" and a "Direct" Absorption-D Sensing System. A difference between these two designs may be the number of coils used to emit and to receive the magnetic field.

Instead of using two independent coils for the T-Pad and the R-Pad function, the "direct measuring" Absorption-D sensor-design may use one coil and a resistor. The magnetic field energy absorbed by the Reference Device may increase the current consumption at the TR-Pad coil, and may increase the voltage drop at the sensing resistor.

The sensor device may be a non-contact measuring device which may ensure a long life time of the sensor device and the elongated object. The measurement principle may be based on an energy measurement using inductive principles. With the sensor device, which is a torque sensor device or a torque sensor, it may be possible to determine a torque of an object in a simple manner, whereas the object may be of any geometrical shape. Thus, the object may be an elongated object of a geometry with a straight elongated axis as well as an elongated object which has a non-straight elongated axis, for example a curved elongated axis. In addition, the cross section of the elongated object may be of any shape.

The elongated object or shaft, also called sometimes the "primary sensor", may have a symmetrical cross section shape over the entire linear position sensor length. In such a case the output signal of the here described sensor system may show a "linear" behavior in comparison to a non-symmetrical shaped cross section. Furthermore, no mechanical changes may be necessary on an existing object or shaft in order to install the sensor device, since the first coil may be of any geometry, especially in shape, in diameter and in length.

The first coil may be therefore adapted in order to fit with the elongated object without having contact with the elongated object for a non-contact measurement. Furthermore, the elongated object may be solid or may be hollow or a combination thereof. The elongated object may be stressed by a force which force may cause a torque at the elongated object. The force may be a driving force, i.e. from a driving motor such as an electric motor or a combustion motor. Moreover, it may be possible that the elongated object may be fixed and therefore may be not movable in a rotational way. In such a situation a torque may also occur at the elongated object caused by a force although the elongated object is locally fixed at least at one end of the elongated object and may be installed for non-rotating operation. The sensor device may be utilized in order to measure a torque to monitor a critical limit of a mechanical stress at the elongated object.

The first coil may be a cylindrical coil. The elongated object may be a metallic object, i.e. of ferro or para magnetic material. The first coil may be fixed in the proximity of the elongated object, meaning the first coil may be installed in a non-movable way, whereas the elongated object may be stressed by a force which may generate a torque at the elongated object. In a further example the elongated object may be installed movable in a rotational way. A torque at the movable elongated object may cause a relative movement in respect to the first coil, i.e. a rotational movement. For example a shaft of an engine may rotate in order to operate the engine or in order to drive a load. This rotational movement may be utilized for the torque measurement at the same time while the elongated object may perform an operation. A rotational movement within the first coil may provide a compact sensor device, since space is often limited when applying a torque measurement within industrial processes or on transportation devices, like ships or trucks.

The power source may be an ac power source (AC: alternating current) or a DC (DC: direct current) power source in order to supply the first coil and further coils. An ac power source may supply an alternating current or an alternating voltage or both. The ac power source may be an oscillator or may comprise an oscillator. An oscillator may provide a predetermined frequency. The frequency of the ac voltage may be variable or fixed. The value of the frequency may be provided for the evaluation device before and or during the torque measurement. The evaluation device may be adapted to use a current through the resistor and a value of the resistance of the resistor or a voltage across the resistor and the value of the resistance. The determined energy of the evaluation unit may correspond with the absorbed energy of the elongated object measured at the first coil. The absorbed energy may vary in dependence of different applied torques at the elongated object. The magnetic field of the first coil may be influenced by the material and changes inside the material of the elongated object, which material may be of any material suitable to influence the magnetic field of the first coil.

The elongated object may be made of any magnetic or ferromagnetic or para magnetic material. The energy may be understood as absorption energy absorbed by the material of the elongated object when incorporating the first coil. This absorbed energy may be determined by a measurement at the resistor connected with the first coil. An absorbed energy may occur when the elongated object may be present in the proximity of the first coil. The detection of an absorbed energy may be based on electromagnetic induction. The absorbed energy in the elongated object may cause effects in the material of the elongated object, i.e. changes in a micro structure of the magnetic material.

The operation frequency of the torque sensor may be chosen in relation to the material of the observed elongated object, i.e. to the shaft material. The operational frequency may be different for different para magnetic and ferro magnetic materials. Thus, the sensor principal may be based on the capabilities from different para and ferro magnetic materials to "absorb" a magnetic field, i.e. an energy.

The evaluating device may comprise a control electronic, which control electronic may be adapted for scanning for an optimal or substantially optimal "absorption" frequency when using an ac power source. This feature may allow the sensor device to adapt the measurement performances when an operational temperature is changing or when the shaft material may change slightly, i.e. when exchanged in a repair or maintenance cycle or during production as the shaft may come from different metal production charges.

The evaluation unit and/or further electronic circuits and/or electronic components may be located apart from one or more coils of the sensor device, i.e. at a location in a distance from the installed sensor elements or installed measuring coils or sensor coils. Thus, the sensor device may be in-sensitive to mechanical shocks and vibrations occurring at the elongated object.

A connection of an electronic element, such as a coil or a resistor, and a connection of an electronic device, such as an evaluation unit or a power source, may be understood in this context as an electric connection.

According to an exemplary embodiment of the invention the sensor device may comprise a second coil, wherein the second coil may be adapted to incorporate an elongated object. Furthermore, the second coil may be adapted to provide a reference measurement with respect to the first coil.

A reference measurement may be performed by comparing a first signal of the first coil at the first resistor and a second signal of the second coil. The first signal may be compared with the second signal with a comparator device or a measurement bridge. A reference signal of the second coil may be a torque value, which may have been measured in a situation when no torque was present at the elongated object. Moreover, the reference signal of the second coil may be a torque value, which may be measured at the same time when a torque measurement may be performed with the first coil. Thus, a real time measurement may be provided by providing a real time value of the torque at the elongated object and by eliminating additional influences with the help of the measurement of the second coil.

Furthermore, a reference measurement may be utilized in order to detect present environmental factors without using further sensors. When comparing the measurement of the first coil with the measurement of the second coil, then environmental factors may be eliminated. Moreover, a reference measurement may be utilized in order to measure a property of the elongated object, such as a magnetic permeability µr.

A reference measurement may also comprise a self-calibration, which may be provided in order to perform a precise torque measurement. Furthermore, using a second coil for a self-calibration of the sensor device may provide a robust device which may be insensitive in respect to environmental factors, such as dust, humidity and temperature. Coils may be in general robust electrical components. The calibration may be performed in real time during the torque measurement or in advance in a preparation phase of the torque measurement. The calibration may also be performed in predetermined time intervals during the measurement or during each torque displacement of the object.

A similar measuring principle may be used for the second coil as used for the first coil. Thus, an energy measurement may be performed in a circuit of the second coil by utilizing a second resistor. An ac source with a predetermined frequency may be connected with the second coil. Another possibility is to supply the second coil by a dc power source. A further possibility may be that one common ac source for the sensor device or one common power source for the first coil and for the second coil may be provided. A first resistor may be connected to one terminal of the first coil and a second resistor to one terminal of the second coil, respectively. These resistors may also be connected with the evaluation unit, which may be connected with the first coil. Therefore only one evaluation unit may be utilized. The self-calibration may be performed at any time, which may include the performance of self-calibration timely before performing the torque measurement, timely after performing the torque measurement and also during performing the torque measurement. Therefore the sensor device may be suitable for different applications without changing the principle of measurement of the first coil.

According to an exemplary embodiment of the invention the second coil may be connected with a second resistor and the evaluation unit may be adapted to measure an absorbed energy at the second resistor, which absorbed energy may depend on the torque of an elongated object.

Thus, a torque measurement may be performed similar or identical by the second coil compared to the torque measurement of the first coil.

According to an exemplary embodiment of the invention the first coil and the second coil may be identical.

This may be of advantage when a first absorbed energy measured by the first coil and a second absorbed energy measured by the second coil may be compared. No further calculation factors may be needed, since both coils may be identical in their behavior based on the same characteristics like the number of the windings, the material and the geometry. At the beginning of a torque measurement the evaluation device or the processing electronics may provide a compensation in order to compensate a variation of measured signals due to substantially small coil parameters variations.

The measurement coils, also called sometimes the "secondary sensor", may be operated in parallel, meaning that each coil may have its own electronic driver stage and signal conditioning and signal processing circuits. Another possibility may be that the first coil and the second coil may be operated in sequence, which may be called "multiplexed" operation.

According to an exemplary embodiment of the invention an elongated object may comprise a first diameter and a second diameter, wherein the first coil may be adapted to incorporate the elongated object at the first diameter and the second coil may be adapted to incorporate the elongated object at the second diameter.

When a torque is applied at the elongated object the different diameters of the elongated object may influence the first coil and the second coil in a different way. The torque may cause at a first diameter, i.e. a smaller diameter compared to the second diameter, a higher torque value, meaning a higher absorbed energy than at a second diameter, which may be larger then the second diameter. Thus, two different absorbed energy may be measured due to the different diameters of the elongated object, meaning a first absorbed energy measured by the first coil at the first diameter and a second absorbed energy measured by the second coil at the second diameter. These different absorbed energies may be compared in the evaluating device.

The different diameters of the elongated object may increase the difference between a first torque value based on a first measurement of a first absorption energy with the first coil and a second torque value based on a second measurement of a second absorption energy with the second coil. Thus, the first absorbed energy and the second absorbed energy may be distinguished without any further evaluating operations due to their different ranges.

When the first absorbed energy and the second absorbed energy may be compared at two different times, i.e. one measurement before torque may be applied and one measurement when torque may be applied, then two relative values may be compared. The first relative value may be based on a first comparison at a first time when both coils may measure a torque value, respectively. A second relative value may be based on a second comparison at a second time when both coils may measure a torque value, respectively.

According to an exemplary embodiment of the invention an elongated object may comprise a first magnetic permeability µr1 and a second magnetic permeability µr2. Moreover, the first coil may be adapted to incorporate the elongated object at the first magnetic permeability and the second coil may be adapted to incorporate the elongated object at the second magnetic permeability.

The first magnetic permeability and a second magnetic permeability may be caused by a first magnetic material at a first portion of the elongated object and on a second magnetic material at a second portion of the elongated object, respectively. Moreover, the first magnetic permeability and a second magnetic permeability may be caused by different portions of the elongated object comprising different hardening characteristics. These hardening characteristics may be provided during the manufacturing of the elongated object. A first hardening portion comprising a first magnetic permeability and a second hardening portion comprising a second magnetic permeability may be provided by treating the first portion and the second portion in a different way, i.e. by hardening the entire elongated object and afterwards by tempering only one portion of the elongated object.

According to an exemplary embodiment of the invention at least one of the first coil and the second coil is a coil with three dimensional windings.

A coil comprising a three dimensional winding may surround the elongated object by the windings, such as a cylindrical coil. The inductive influence of the material of the elongated object may be measured without any substantially further influences. Furthermore, the available space may be used in an efficient way, since a coil containing in its inner space during the operation totally or partly the elongated object may not need any substantially extra space. The coil may be mounted at the elongated object with a space between the elongated object and the windings of the coil surrounding the elongated object, in order to avoid additional mechanical forces between the coil and the elongated object. A cylindrical coil with an elongated axis may be utilized and the elongated object may be present in the inner of the coil at any time during the torque measurement.

According to an exemplary embodiment of the invention at least one of the first coil and of the second coil is a coil with two dimensional windings.

The coil with two dimensional windings may be a flat coil. The flat coil with two dimensional windings may be curved or may comprise three dimensions, i.e. to be curved in relation to an elongated cylindrical object. This exemplary embodiment may be utilized when limited space may be available. A flat coil may be easy to install. Furthermore, a flat coil may be easy fixed on a plane or a curved cover in order to protect the coil from environmental influence. A flat coil with two dimensional windings may also be installed in a three dimensional way, i.e. by arranging the two dimensional windings on a curved plane. The curved plane may comprise a convex or a concave shape in relation to the surface of the elongated object. Thus, the two dimensional windings may have a minimum distance to the surface of the elongated object without causing additional mechanical forces.

According to an exemplary embodiment of the invention at least one coil of the first coil and the second coil may be adapted to incorporate the elongated object at a non-torque portion of the elongated object.

A non-torque portion of the elongated object may be understood as portion where no torque or substantially no torque may be present. The elongated object may be a one piece object. It may also be possible that the elongated object may comprise a first piece and a second piece, wherein the first piece is a torque stressed portion and the second piece is a non-torque stressed portion or a non-torque portion. A portion of the elongated object where no torque or substantially no torque occurs may be utilized for a reference measurement, i.e. of the second coil. Thus, a difference of absorbed energies may be measured when comparing a measurement at a torque stressed portion and at a non-torque portion. Thus, different locations at the elongated object may increase the difference between a first torque value based on a first measurement of a first absorption energy with the first coil and a second torque value based on a second measurement of a second absorption energy with the second coil.

According to an exemplary embodiment of the invention the sensor device may comprise a third coil, wherein the third coil may be adapted to incorporate an elongated object and wherein the third coil may be adapted to provide a reference measurement.

It may be possible that the first coil, the second coil and the third coil are aligned to each other in the direction of a longitudinal axis of the elongated object. This may provide a compact coil arrangement by saving space in the surrounding of the elongated obj ect.

The third coil may be identical with the first coil and/or with the second coil. The third coil may provide a third torque measurement. Thus, the third coil may be connected to a resistor and a power source like the first coil and/or the second coil. Moreover, the third coil may be utilized to provide a reference measurement and /or a self calibration. A reference measurement may be provided in relation to the measurement of the first coil. Moreover, a reference measurement may be provided in relation to the measurement of the second coil. It may also be foreseen that the measurement of the second coil and the measurement of the third coil may be compared with a comparing device or a measurement bridge. The performed comparison may provide a calibration of the sensor device. Moreover, the third coil may be utilized in order to provide a redundant measurement in order to provide a precise measurement when comparing the measurement of the second coil with the measurement of the third coil. Furthermore, the third coil may be utilized in order to provide a failure detection of the sensor device. A failure may be detected when the measurement of the first coil and the measurement of the second coil may be compared both to the third coil as reference coil.

According to an exemplary embodiment of the invention a shaft arrangement may be provided. The shaft arrangement may comprise a sensor device and an elongated object.

For the shaft arrangement the same features may be present as described above in relation to the sensor device.

According to an exemplary embodiment of the invention in relation to a shaft arrangement the elongated object may be selected from a group of elongated objects, the group may consist of an elongated object comprising a magnetic permeability at substantially an entire length of the elongated object, an elongated object comprising a first diameter and a second diameter, an elongated object comprising a first magnetic permeability at a first portion of the elongated object and a second magnetic permeability at a second portion of the elongated object and an elongated object comprising a first magnetic permeability at a first portion of the elongated object, a second magnetic permeability at a second portion of the elongated object and a data transfer area at a third portion of the elongated object.

According to an exemplary embodiment of the invention the shaft arrangement may comprise an elongated object, which elongated object may comprise an input side and an output side, wherein a first coil may be positioned between the input side and the output side and wherein a second coil may be positioned at a non-torque portion of the elongated object.

According to an exemplary embodiment of the invention a method for measuring a torque of an elongated object may be provided. The method may comprise generating a magnetic field and measuring at least one absorbed energy in dependence of the torque of the elongated object.

The generation of the magnetic field may be provided by utilizing at least one coil of the sensor device. The elongated object may absorb at least a part of the generated magnetic field. The absorption may depend on the applied torque at the elongated object.

According to an exemplary embodiment of the invention the method may comprise providing a reference measurement by using a second coil.

A reference measurement may comprise a self-calibration. For the shaft arrangement the same features may be present as described above in relation to the sensor device.

It has also to be noted that exemplary embodiments of the present invention and aspects of the invention have been described with reference to different subject-matters. In particular, some embodiments have been described with reference to apparatus type claims or device type claims whereas other embodiments have been described with reference to method type claims. However, a person skilled in the art will gather from the above and the following description that unless other notified in addition to any combination between features belonging to one type of subject-matter also any combination between features relating to different subject-matters in particular between features of the apparatus claims and the features of the method claims may be considered to be disclosed with this application.

These and other aspects of the present invention will become apparent from and elucidated with reference to the embodiments described hereinafter.

Exemplary embodiments of the present invention will be described in the following with reference to the following drawings.

### BRIEF DESCRIPTION OF THE DRAWINGS

Below, the invention is explained in an exemplary manner with reference to the enclosed drawings. It should be pointed out that the embodiments of the invention shown in the figures explain the invention purely by way of examples, and in particular are not to be interpreted in a way as limiting the scope of protection of the invention. In the drawings:
- Fig. 1: shows a sensor device comprising a first coil according to an exemplary embodiment of the invention,
- Fig. 2: shows a sensor device comprising a first coil with three dimensional windings and a second coil with three dimensional windings according to an exemplary embodiment of the invention,
- Fig. 3: shows a sensor device comprising a first coil with two dimensional windings and a second coil with two dimensional windings according to an exemplary embodiment of the invention,
- Fig. 4: shows a sensor device comprising a first coil, a second coil, a third coil, a forth coil and a fifth coil with two dimensional windings, respectively, according to an exemplary embodiment of the invention,
- Fig. 5: shows a plane with coils comprising two dimensional windings according to an exemplary embodiment of the invention,
- Fig. 6: shows a sensor device comprising a first coil and a second coil according to an exemplary embodiment of the invention,
- Fig. 7: shows a sensor device comprising a first coil and a second coil according to an exemplary embodiment of the invention,
- Fig. 8: shows a sensor device comprising a first coil, a second coil and a third coil according to an exemplary embodiment of the invention,
- Fig. 9: shows a sensor device comprising a first coil and a second coil according to an exemplary embodiment of the invention,
- Fig. 10: shows a sensor device comprising a first coil, a second coil and a third coil according to an exemplary embodiment of the invention,
- Fig. 11: shows a mechanical driving system comprising a sensor device according to an exemplary embodiment of the invention,
- Fig. 12: shows a further driving system comprising a sensor device according to an exemplary embodiment of the invention,
- Fig. 13: shows a circuit comprising a first coil and a second coil according to an exemplary embodiment of the invention,
- Fig. 14: shows a circuit comprising a first coil, a second coil and a third coil according to an exemplary embodiment of the invention,
- Fig. 15: shows a block diagram according to an exemplary embodiment of the invention and
- Fig. 16: shows several configurations for an alternating magnetic field generator according to an exemplary embodiment of the invention.

### DETAILED DESCRIPTION OF EMBODIMENTS

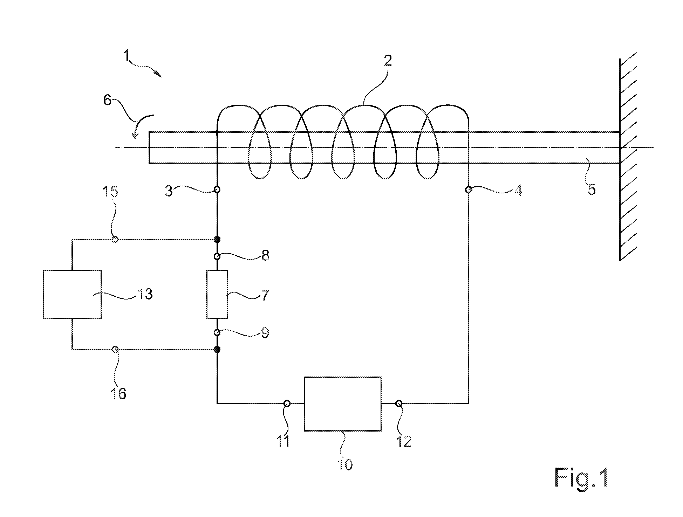

Figure 1 shows a first exemplary embodiment of a sensor device 1 according to the present invention. A cylindrical coil 2 with a plurality of windings comprises a first coil terminal 3 and a second coil terminal 4. The coil 2 is axially arranged in respect to a shaft 5. Here the shaft 5 maybe a part of a motor, i.e. of a diesel engine installed at a ship. The shaft 5 has an elongated axis and is movable in the direction of its rotational surface or lateral area. The direction of the movement in two dimensions as rotational movement is indicated by arrow 6.

All windings of the first coil 2 interact with the shaft 5 made of a material with a magnetic permeability. Therefore the shaft 5 is surrounded by the windings of the coil 2.

The sensor device comprises a resistor 7 with a first resistor terminal 8 and a second resistor terminal 9. The first resistor terminal 8 is connected with the first coil terminal 3. In addition to the first resistor 7 the circuit of Figure 1 comprises an oscillator 10 as an ac power source with a first power source terminal 11 and a second power source terminal 12. The first power source terminal 11 is connected with the second resistor terminal 9. Furthermore the second power source terminal 12 is connected with the second coil terminal 4 of the first coil 2.

The first coil terminal 3 of the first coil 2 and also the first resistor terminal 8 of the resistor 7 are connected with an evaluation unit 13. This evaluation unit 13 uses for a torque measurement the energy which may be present at the resistor 7, i.e by a voltage value, and which may stay in relation to the energy absorbed by the material of the shaft 5 present inside the first coil 2. The absorption may change when the torque at the shaft 5 changes. This absorption change may be caused by inner effects in the material of the shaft due to a torque stress. This absorbed energy measured at the resistor 7 may indicate the torque at the shaft 5. The moving shaft 5 may cause a change in the measured absorption energy when starting from a non-operation situation, i.e. the torque may be zero, to an operation situation, i.e. the torque may be unequal to zero. A comparison of different torque measurements depending on time, i.e. at predetermined time intervals, may be performed by the evaluating device 13 by measuring a voltage at the resistor 7, which voltage may represent a certain absorption energy and therefore may represent a certain torque applied at the shaft 5 at the moment of the measurement. Thus, for a torque measurement only one coil 2 may be utilized. The coil 2 may generate a magnetic field with the connected power source 10 and due to the torque at the elongated object 5 during a magnetic field is present, a voltage at the resistor 7 may be measured by the evaluating device 13 or evaluation device 13.

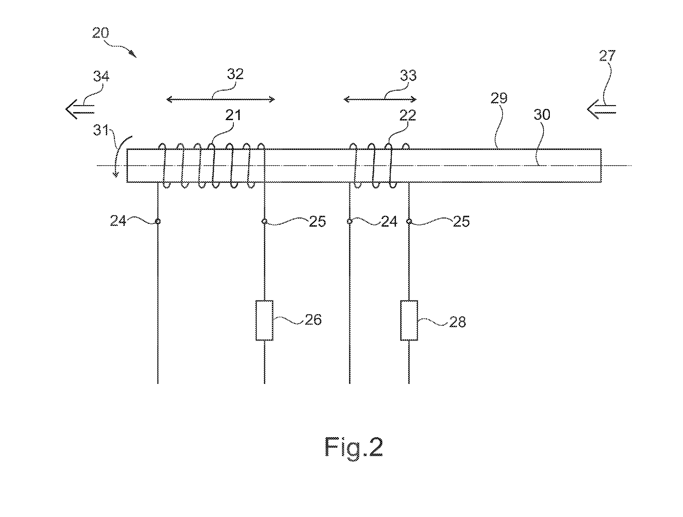

Fig. 2 shows a further exemplary embodiment of the invention of a sensor device 20 with an arrangement of two coils comprising a first coil 21 and a second coil 22. Each coil 21, 22 comprise a first coil terminal 24 and a second coil terminal 25, respectively. Furthermore a first resistor 26 is connected with one terminal of the first coil 21, here the second coil terminal 25. A second resistor 28 is connected with one terminal of the second coil 22, here the second coil terminal 25. The second terminal of each resistor 26, 28 is connected with an evaluation unit 13, which is not shown in Fig. 2, but shown in Fig. 1. Furthermore, the first terminal of each coil 21, 22 is connected with an ac power source, respectively, which supplies each coil with a predetermined power and a frequency. Instead of two different or identical power sources a common power source may be provided for all sensor coils in this and all other exemplary embodiments. Moreover, the first resistor 26 and the second resistor 28 may have the same resistance value.

In Fig. 2 a shaft 29 has an elongated axis 30 and is rotational movable in the direction of the arrow 31. Moreover, the shaft has an input side 27 and an output side 34. The shaft 29 may transmit a torque from one end of the shaft to another end of the shaft as indicated by arrows 27, 34. The shaft may be driven by a motor on the input side 27 and may drive a load at the output side 34. At the elongated object 29 two sensor coils 21, 22 are arranged. The first coil 21 and the second coil 22 are positioned between the input side 27 and the output side 34 of the shaft 29. The coils 21, 22 are cylindrical coils comprising an elongated axis, whereas the coils 21, 22 are aligned to each other in respect to their elongated axis, respectively. Each elongated axis of each coil has the same direction as the elongated axis 30 of the shaft 29.

The first coil 21 has an elongation 32 and the second coil 22 has an elongation 33, wherein the elongations may be identical in the present embodiment due to the identical number of windings of the first coil 21 and the second coil 22. In each operation situation of the shaft 29 the shaft 29 is arranged inside the first coil 21 and inside the second coil 22. In another embodiment is may also be possible, that the shaft is in addition to its rotational movement also movable in the direction of the elongated axis 30. Then a superposition of different movements may occur.

The second coil 22 is part of a reference measurement of the sensor device 20. For the reference measurement the information of the energy may be used at the second resistor 28. The value of the energy at the first resistor 26 may represent or indicate a value of the relative magnetic permeability µr inside the second coil 22 when stressed by a torque at the elongated object. The value of the energy at the second resistor 28 may represent or indicate a value of the relative magnetic permeability µr inside the second coil 23 when stressed by a torque at the elongated object. In the present embodiment the relative magnetic permeability µr may be the same at the entire shaft 29 including the position of the first coil 21 and the second coil 22.

In the present embodiment the surrounding of the coils 21 and 22 may be air or a gas. The material of the shaft 29 may be stainless steel. Since both coils 21, 22 are surrounding the relative magnetic permeability of the stainless steel, the energy measured at the first resistor 26 and at the second resistor 28 may be identical or similar, since both sensor coils 21, 22 are identical, i.e. in their number of windings and in their geometrical dimensions. Therefore a self-calibration may be performed at a certain time, i.e. before a torque may be applied or at a time when a torque may be applied. If both coils 21 and 22 are measuring the same absorbed energy then a measurement failure may be excluded based on the self-calibration. Otherwise if there is a difference in the two measurements of the first coil 21 and the second sensor coil 22, then a self-adjusting may be initiated by the evaluation device 13 connected to the first resistor 26 and to the second resistor 28, respectively. During each operation moment of the shaft 29 it may be possible to measure the absorbed energy of the elongated object 29 at the first resistor 26 and at the second resistor 28. The values of the different measurements may be stored in the evaluating unit 13 and after a certain time the values may be compared to subsequent values measured later in time. Thus, a drift of the measurement device 20 may also be detected.

In the case when the first coil 21 and the second coil 22 of Fig. 2 are not identical and the elongated object comprises on its entire length a constant magnetic permeability, then the second sensor coil 22 may provide a reference measurement when the first coil measures a different absorbed energy compared to the second coil measurement. The first absorbed energy and the second absorbed energy may be measured at the same time by the two coils 21, 22 and their resistors 26, 28, respectively. The values may be compared afterwards in order to measure the torque at the elongated object 29 as a relative torque value. Using one coil may provide an absolute torque measurement. The absolute torque measurement may become a relative torque measurement when a storage of former torque values may be provided and different torque values may be compared from different time intervals.

The sensor device 20 may have the advantage that when changing the medium inside the second coil for example, because of an increase of humidity, then the first coil 26 is also influenced by this change of medium, because the first coil 21 and the second coil 22 are positioned close to each other and a difference in the surrounding gas inside the first coil 21 and inside the second coil 22 in the gap between the windings and the elongated object may be unlikely. Therefore the sensor device 20 may be suitable for every kind of surrounding medium, which may also be dust or liquid, such as water. Thus, the measurement of the torque at the elongated object 29 may not be influenced by these environmental factors as long as the inner of the first coil 21 and the inner of the second coil 22 are influenced by the same environmental parameters, which may be likely in such a configuration. In addition, based on the self calibration the sensor device 20 may operate and measure in a precise manner without being influenced by further factors.

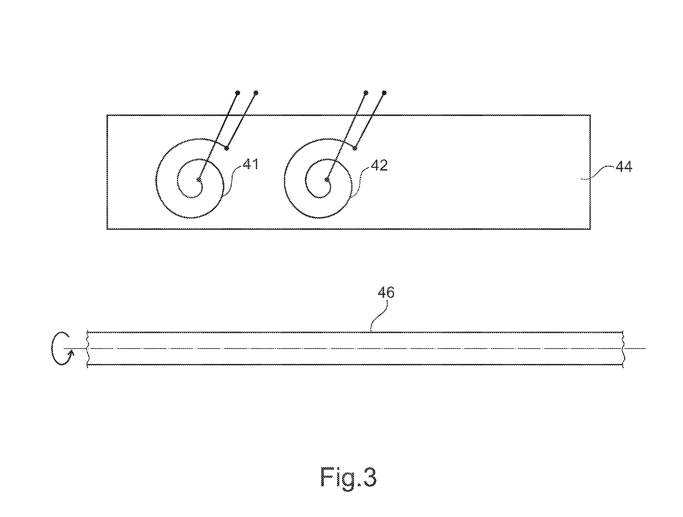

Figure 3 shows another exemplary embodiment of the present invention of a sensor device 40. In this embodiment a coil arrangement with two flat coils are provided. The measurement arrangement comprises a first coil 41 and a second coil 42. The two coils in Fig. 3 comprise a two-dimensional structure, respectively. The first coil 41 and the second coil 42 are arranged in a plane 44. The plane 44 is orientated towards a shaft 46, wherein the plane 44 may have also a two-dimensional shape or may be afterwards bended in order to surround at least partly a lateral area of the shaft.

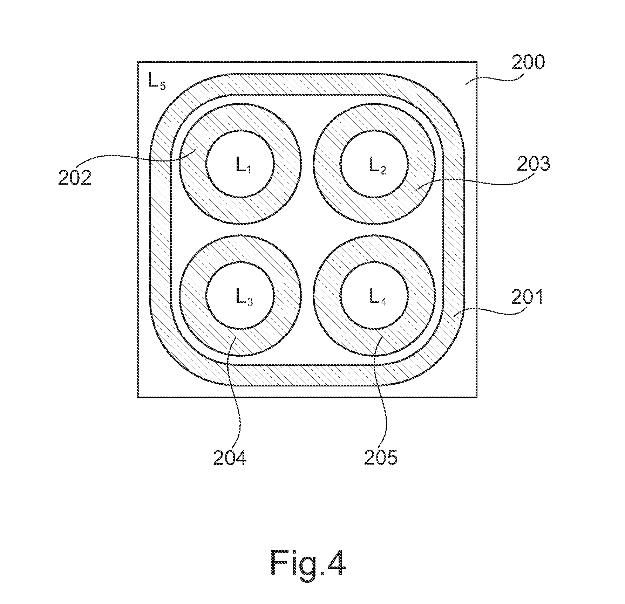

Fig. 4 shows a further exemplary embodiment of the present invention. A pad or a plane 200 is provided, which may be also mounted in relation to the elongated object as shown in Fig. 3 for the plane 44. The plane 200 of Fig. 4 comprises a first coil 201, a second coil 202, a third coil 203, a fourth coil 204 and a fifth coil 205. The first coil 201 may be connected with a power source and may be providing a magnetic field at a shaft. The second coil 202, the third coil 203, the fourth coil 204 and the fifth coil 205 may be connected with a an evaluation unit 13 over a first resistor 206, a second resistor 207, a third resistor 208 and a fourth resistor 209, respectively, which are not shown in Fig. 4, but which may be similar connected as shown in Fig. 1, respectively.

Fig. 4 illustrates an exemplary embodiment of a schematic functional coil arrangement. Two basic system designs may be possible: As a first option, transmitting the magnetic field at the outer coil L5 and receiving this signal with the four inner coils 202, 203, 204, 205 (L1 to L4), and as a second option, transmitting the magnetic field with the inner coils L1 to L4 and receiving the signal only with the outer coil 201 (L5).

Assuming that the outer coil 201 (L5) is the receiving coil R-Pad then two of the inner coils may be operated in parallel at the same time; but with opposing polarity or opposing signal phase, i.e., 180 deg phase shift between the two signal sources to transmit the signal by the T-Pad, then there will be no signal received at the outer coil L5 when there is no measurement object (RD) or elongated object near the sensor pad, or when the RD is placed exactly in the geometric middle between the two signal transmitting coils.

In any other case there will be a signal received at the outer coil L5. The phase and signal amplitude received at L5 is directly related to the torque of the RD in relation to the two signal transmitting coils.

As a further explanation: When two identical coils transmit the identical signal, but with the opposite polarity , e.g. when using static signal, DC powered, or with the opposite signal phase when using alternating signal, then the emitted signals / energy are cancelling each other. There is no signal to receive in the outer coil 201 (L5).

The same effect can be achieved when measuring the magnetic energy that has been dissipated by each coil, measuring the voltage drop on each of the two sensing resistors, and compute the difference between the two absorption values.

While it seems that it is economically to use PCB based sensor pad designs, in some applications it may be more cost effective or it may be more resilient to environmental demands, to use discreet electrical components to build the TR-Pads. In the further embodiments illustrated in the drawings the individual TR-Pad coils (when using inductors) are built using "traditional" wire wound components.

The example shown in Figure 4 is a PCB based pad-array. In the same way the other here described sensing solutions can be built discreetly or integrated on a PCB, e.g. the capacitive based and other sensing solution.

The "reference device" (RD), may be one of the following, but is not limited to an absolute value (ratio comparison approach), using absolute magnetic field signal only that are then compared with each other, a differential approach, cancelling magnetic fields from more than one magnetic field emitter in form of e.g. a transmitter (T)-pad and using for a computation (torque definition process or non-torque definition process, i.e. for a reference measurement) the differential signal only. Transmitter pads may be also used as Receiver pads.

It should be noted that the design is not limited to the illustrated embodiment. Also two or three inner coils may be used and one ore more outer coils. Further also other shapes are possible, e.g. triangle or pentagon.

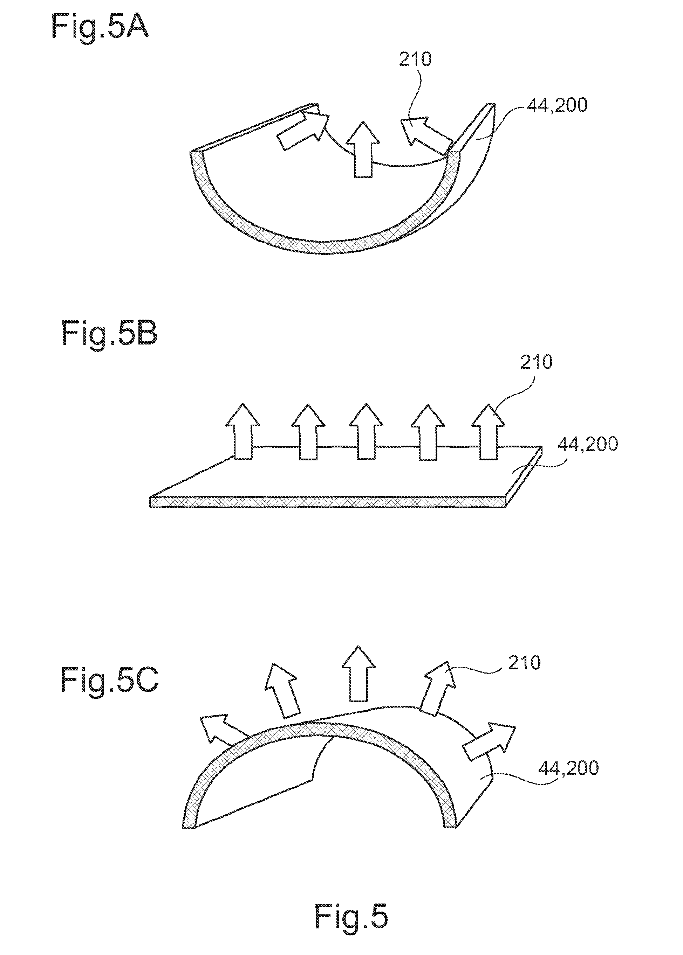

In the drawing shown in Figure 4 a five coil transmitter-receiver (TR)-Pad design is illustrated, laid-out in a fully integrated printed circuit board (PCB) design, so that no discreet or individual components required, other than the PCB and the copper track layout. Instead placing the sensor pads on a "flat" PCB, the sensor pads can be placed on a flex carrier material, i.e a foil. The drawings shown in Figure 5 indicate three embodiments in which direction the sensing pads will be active (arrows), depending on the "shape" of the pad-carrier.

The plane or pad 44 of Fig. 3 and the plane or pad 200 of Fig. 4 with two dimensional coils on the plane may be shaped as shown in Fig. 5. In Fig. 5a the plane 44, 200 may be shaped in a concave way in relation to an elongated object. Thus, the plane 44, 200 of Fig. 5a may surround the elongated object partly or completely at the surrounding surface or lateral surface of the elongated object. In Fig. 5b the plane 44, 200 may be remain unshaped and therefore have a flat shape. In Fig. 5c the plane 44,200 may be shaped in a convex way in relation to the elongated object. The pad 44, 200 of Fig. 5c may be located in a hollow cylindrical elongated object.

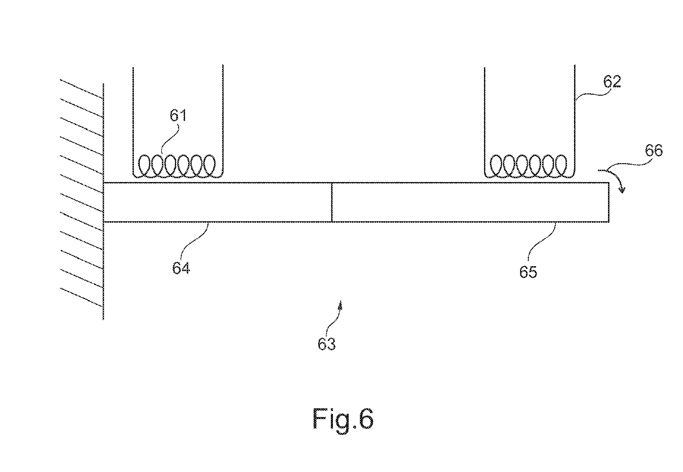

Fig. 6 illustrates a further embodiment of the invention with a first coil 61 and a second coil 62. A shaft 63 is made of two different materials, in a first part 64 the shaft 63 comprises a first material, here iron. In a second part 65 the shaft 63 comprises a second material, here aluminum. With the first coil 61 the torque at the first material is determined and with the second coil 62 the torque at the second material is determined based on an energy measurement of the absorbed energy by the different materials, respectively.

Based on these two energy measurements with the first coil 61 and the second coil 62, the torque of the shaft 63 may be determined by comparing the absorbed energy absorbed by the first material at the first coil 61 and the absorbed energy absorbed by the second material at the second coil 62. The torque of the shaft 63 may be determined by a single evaluation unit, which may be connected over a shunt as resistor to the input of the evaluation unit, respectively. The arrow 66 shows the direction of the movement of the elongated shaft 63. In this arrangement the two coils 61, 62 are positioned in a way that the three dimensional windings of the first coil and the windings of the second coil do not surround the elongated shaft 63 but are positioned near the shaft 63.

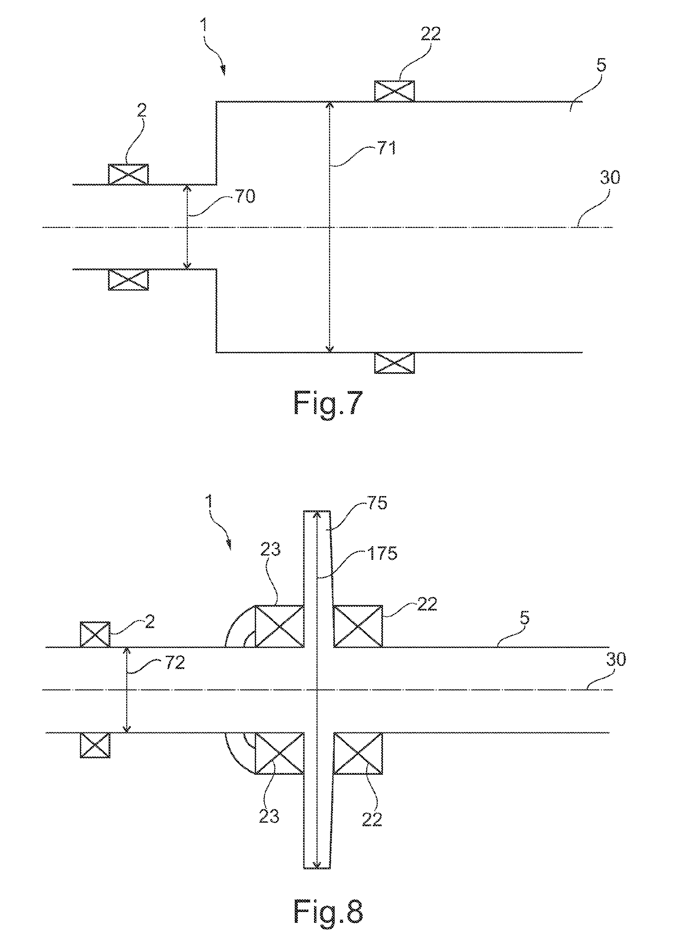

Fig. 7 shows a further exemplary embodiment of a sensor device 1 according to the invention. The shaft 5 may be rotational mounted or may be fixed installed. Two cylindrical coils 2, 22 with several windings comprises a first coil terminal 3 and a second coil terminal 4 and are axially arranged in respect to a shaft 5, respectively. In one example the shaft 5 is an elongated object, which is movable around a longitudinal axis 30 of the shaft 5. The shaft 5 comprises a first diameter 70 and a second diameter 71.

In Fig. 7 the first coil 2 is mounted or arranged at the first diameter 70 and the second coil 22 is mounted or arranged at the second diameter 71. In the exemplary embodiment of Fig. 7 the first coil 2 and the second coil 22 comprise three-dimensional windings which surround the shaft 5, respectively. When the shaft 5 is moving or rotating in relation to the axis 30, then a torque may apply at the shaft 5. The applied torque may cause different torque values at different portions of the shaft 5, in other words, the torque may depend on the diameter of the shaft 5.

In the exemplary embodiment of Fig. 7 the torque at shaft 5 may have a higher value at the location of the first coil 2 mounted at the first diameter 70 in comparison to the second coil 22 mounted at the second diameter 71. When the shaft 5 is moving around the axis 30, then a first torque value at the first coil 2 and a second torque value at the second coil 22 may be measured at a resistor, respectively according to the energy absorption measurement described in the previous Figures. The torque at the shaft 5 may change the characteristic of the shaft 5 and the applied magnetic field. At the first coil 2 a higher torque value may be measured in comparison to a measurement of the second coil 22. Therefore, the second coil 22 may provide a reference value in relation to the measurement of the first coil 2. The shaft 5 of Fig. 7 may comprise the same hardening at its entire length and the same magnetic properties at its entire length. The shaft 5 may be manufactured of one piece.

Fig. 8 shows a further exemplary embodiment of the invention of a sensor device 1 with an arrangement of three coils comprising a first coil 2, a second coil 22 and a third coil 23. The first coil 2 is mounted on the shaft 5 at a first diameter 72. The second coil 22 and the third coil 23 may be mounted also at the first diameter 72, respectively.

In Fig. 8 the second coil 22 and the third coil 23 are utilized as reference coils in relation to the first coil 2. The shaft 5 comprises a portion 75 which may have a shape of a disc and which has a second diameter 175, which may be substantially larger than the first diameter 72. The second portion 75 may represent a barrier at the shaft 5 for transmitting a torque. Thus, the second coil 22 is installed in axial direction on the backside of the portion 75 and the third coil 23 may be installed on the front side of the portion 75 in relation to the position of the first coil 2.

The first coil 2 is mounted at the shaft 5 at a position where torque may be measured. The second coil 22 and the third coil 23 are mounted at a position where equal or less torque in comparison to the first coil 2 may be measured. A comparison of the torque values measured by the first coil 2 and measured by the third coil 23 may represent the effect of the second portion 75 of the shaft in respect to torque transmission. Thus, the third coil may be installed at a torque-free portion of the shaft 5 or at least at a portion of a shaft 5 where an applied torque is smaller than at the feeding point of the applied torque. The feeding point of the applied torque may be close to the first coil 2 but separated from the third coil 23, wherein a separation may be provided be the second diameter 75 of the shaft. The second coil 23 may measure the influence of the second diameter 75 at the interface from the first diameter 72 to the second diameter 75. The coils 2, 22, 23 may be connected with a resistor, an evaluating device and a power source as described.

In another embodiment the portion 175 with the second diameter 75 of Fig. 7 may be a toothed wheel or a gear wheel, which transmits the applied torque to another device connected with the toothed wheel.

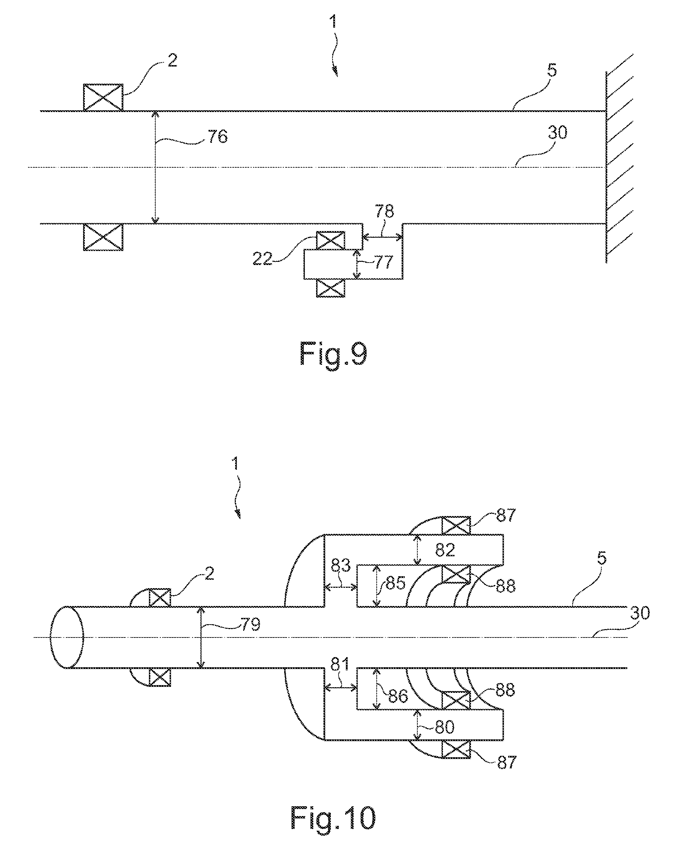

Fig. 9 shows a further exemplary embodiment of a sensor device 1 according to the present invention. The shaft 5 in Fig. 9 may not rotate but may be fixated and may be mounted in order to be stressed by a force which may cause a torque at the shaft 5. The shaft 5 may be monitored in order not to exceed a stress limit and in order to avoid a damage of the shaft 5 due to mechanical forces causing the torque.

In Fig. 9 the shaft 5 comprises a first diameter 76, a second diameter 77 and a third diameter 78. A first coil 2 is mounted at a portion of the first diameter 76 of the shaft 5, wherein a second coil 22 is mounted at a portion at the second diameter 77 of the shaft 5. The first diameter 76 and the second diameter 77 are connected over a portion of the shaft 5 comprising a third diameter 78.

The portion of the second diameter 77 and the portion of the third diameter 78 may be a portion where no torque may occur, i.e. a torque-free location or a non-torque location, where the applied torque at the elongated object may be substantially zero. The first coil 2 is mounted at a portion of the shaft 5 where a torque may be present, i.e. at a torque location of the shaft. The second coil 22 is mounted at a torque-free location of the shaft 5. Therefore the second coil may be mounted at a portion of the second diameter 77 or at a portion of the third diameter 78. Thus, the second coil 22 may provide a reference measuring of a torque value in comparison to the first coil 2, which first coil 2 is sensing the torque of the rotating shaft 5. The coils may be connected with a resistor, an evaluating device and a power source as described.

Fig. 10 shows a further exemplary embodiment of a sensor device 1 according to the present invention. The shaft 5 comprises a first diameter 79, a second diameter 80, a third diameter 81, a fourth diameter 82 and a fifth diameter 83, wherein these diameters are located at different portions of the shaft 5. A portion of the fourth diameter 82 is connected with a portion of the first diameter 79 over a portion of the fifth diameter 83. A portion of the second diameter 80 is connected with a portion of the first diameter 79 over a portion of the third diameter 81. The first diameter 79 and the fourth diameter 82 are spaced apart from each other by a first distance 85. The first diameter 79 and the second diameter 80 are spaced apart from each other by a second distance 86. The shaft 5 may be foreseen for a non-rotational movement. The shaft may comprise a rectangular cross section and on two opposite sides of the lateral surface of the shaft, the diameter 83, 82 and the diameters 80, 81 may be arranged.

In another exemplary embodiment the shaft of Fig. 10 may comprise circular cross section and may be installed for a rotational movement. Then, in Fig. 10 the second diameter 80 and the fourth diameter 82 may be of identical dimension. Moreover, the third diameter 81 and the fifth diameter 83 may also be of identical dimension. This may avoid an imbalance of the rotationally mounted elongated object 5. Thus the structure of the shaft comprising the second diameter 80, the third diameter 81, the fourth diameter 82 and the fifth diameter 83 may be symmetrical in relation to the axis 30 of the shaft 5. Moreover, the first distance 85 and the second distance 86 may be identical.

In Fig. 10 there may be provided a second coil 87 which may be mounted on the outer surface of the portion comprising the fourth diameter 82 and on the outer surface of the portion comprising the second diameter 80, respectively. For a shaft comprising a circular cross section the two diameters may be identical. A further option may be utilizing a third coil 88 mounted at the inner surface of the portion comprising the fourth diameter 82 and on the inner surface of the portion comprising the second diameter 80, respectively, wherein the two diameters may be identical.

When three coils are utilized in such a configuration a comparison between the measurement of the torque at the second coil 87 and at the third coil 88 may provide in addition a measurement of centrifugal force which may cause a displacement of the portion comprising the fourth diameter 82 and the portion comprising the second diameter 80. Thus a measurement compensating a centrifugal force may be provided. Thus, the measured values of the second coil 87 and of the third coil 88 may be compared to each other. In addition, the measured values of the second coil 87 and of the third coil 88 may be compared to the values measured by the first coil 2, respectively. Therefore with the three coils 2, 87, 88 a reference measurement may also be provided irrespective if the shaft is mounted rotationally or non-rotationally.

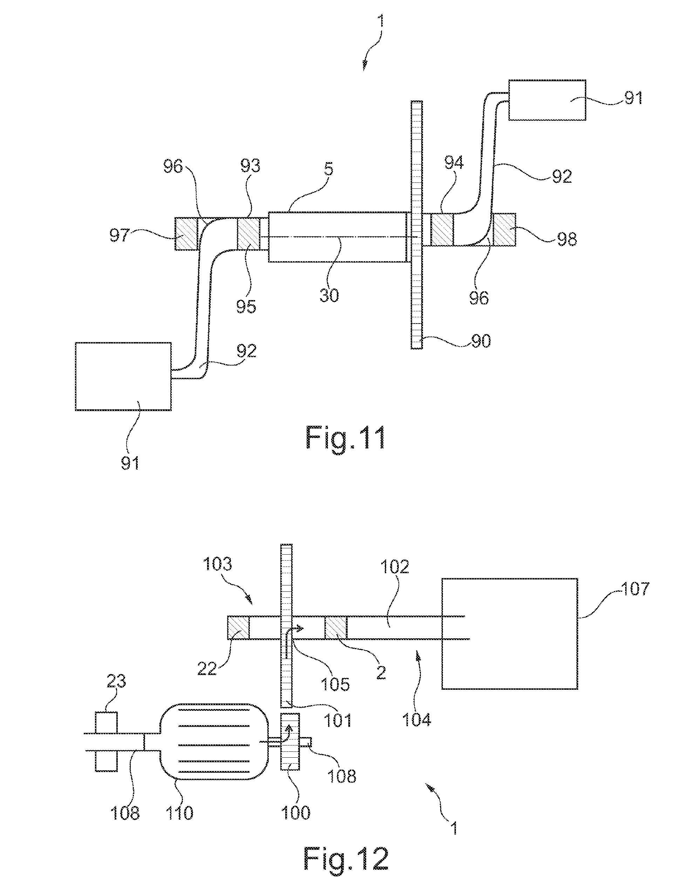

Fig. 11 shows a further exemplary embodiment of a sensor device 1 according to the present invention. Fig. 11 shows a mechanically driven elongated object, which is here a shaft 5 of a bicycle. The shaft 5 is driving a chain wheel 90. Two paddles 91 are connected over a crank 92 with the shaft 5, respectively. On the crank 92 a first coil 93 or a TR and a third coil 94 or a TR is mounted, respectively. The first coil 93 and the third coil 94 are mounted at a location of an intersection from the shaft 5 to the crank 92, respectively.

The crank 92 comprises a first part 95 or portion with an elongated axis in the direction of the elongated axis 30 of the shaft 5. Furthermore, the crank 92 comprises a second part or portion which may be substantially orthogonal to the axis 30 of the shaft 5. Furthermore, the crank 92 comprises a third section or portion which is in parallel to the section 95 and the axis 30 of the shaft 5. At one end of the crank 92 at the third section the paddle 91 is mounted, respectively. From these paddles 91 a torque is caused when driving the bicycle.

In the exemplary embodiment of Fig. 11 it may occur that two different torque values due to different forces at the two paddles 91 may occur, respectively. The different torques, in particular a first torque and a second torque, may be measured by the first coil 93 and the second coil 94, respectively. The crank 92 comprises a non-torque stress location 96, which may be located at the interface of the first part and the second part of the crank 92. At this non-torque stress position a second coil 97 and a fourth coil 98 may be mounted, respectively. With the third coil 97 and the fourth coil 98 a reference measurement may be provided, respectively in relation to the first coil 93 and the second coil 94.

Fig. 12 shows an exemplary embodiment of a sensor device 1 according to the present invention. An electrical motor 110 may drive over a first toothed wheel 100 and a second toothed wheel 101 a load 107. The first toothed wheel 100 is connected with a first shaft 108 of the motor 110. The load 107 is connected with a second shaft 102. The first toothed wheel 100 and the second toothed wheel 101 are coupled mechanically. The second shaft 102 comprises a non-torque stress portion 103 and a torque stressed potion 104 wherein the non-torque stress location 103 and the torque stressed location 104 are separated by a torque feed-in point 105 at the second shaft 102. The torque feed-in point 105 is located where the second toothed wheel 101 is connected with the second shaft 102.

In Fig. 12 a first coil 2 or a TR is arranged at the second shaft 102 at a torque stressed location 104. A second coil 22, which provides a reference measurement may measure a reference torque at a non-torque portion of the second shaft 102. Therefore the second coil 22 may be mounted at one end of the second shaft 102, where a non-torque stress location is present. The second shaft 102 may be also called as a RD (Reference Device), since at the second shaft 102, which may be the monitored object, a magnetic field absorption may occur.

The electrical motor 100 may provide a torque which is transmitted to a first portion 104 of the first shaft 102. At the first portion 104 a torque may be present when driving the load 107. A torque may be not present or may substantially be zero at a second portion 103 of the shaft 102.

The first coil 2 in combination with the second coil 22 may provide a torque measurement. Therefore the first coil 2 and the second coil 22 may measure at a first time a first torque provided by the electrical motor 100. At a second time, for example when the load 107 has changed or when the engine speed of the motor 110 may be changed, the first coil 102 may measure a different torque value compared to the torque value of the first time. The torque value of the first coil 102 at the second time may be compared to torque value of the second coil 22, which may be still unchanged when comparing the value of the first time and value of the second time. In other words, the second coil 22 may be a reference coil in relation to the first coil 2.

It may be also possible to install a third sensor 22 in addition or instead of the second sensor at the shaft 108 of the motor for providing a reference measurement. The third sensor 23 may be located at a non-stressed portion of the motor shaft 108.

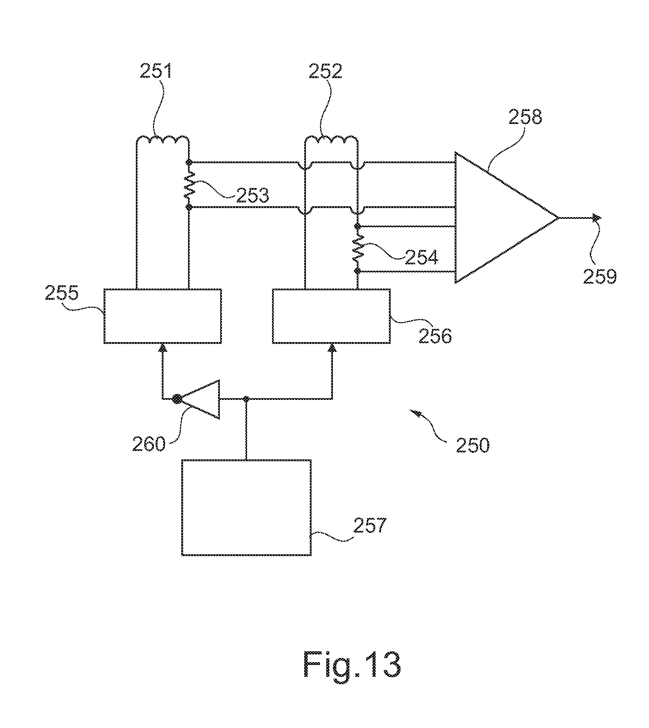

Fig. 13 shows sensor device 250 with a measuring circuit comprising a first coil 251, a second coil 252, a first resistor 253 and a second resistor 254. The first coil 251 is connected over the first resistor 253 with a first driver circuit 255. The second coil is connected over the second resistor 254 with a second driver circuit 256. A signal source 257 is connected with the first driver circuit 255 and also connected with the second driver circuit 256. The signal source 257 provides a signal to the first driver circuit 255 and to the second driver circuit 256, respectively.

A first signal at the first resistor 253, i.e. a first voltage, may be a first input signal of a signal computation 258, i.e. a comparator or a measuring bridge or a testing bridge. A second signal at the second resistor 254, i.e. a second voltage, may be a second input signal of the signal computation 258. The signal computation 258 may provide a signal output 259. The first driver circuit 255 and the second driver circuit 256 may be connected over a further electronic component 260, i.e. an inverter. Thus, a first electromagnetic field may be generated by the first coil 251 in a first direction and a second electromagnetic field may be generated by the second coil 253 in a second direction. The first direction and the second direction may be of the same strength and may be of opposite directions to each other.

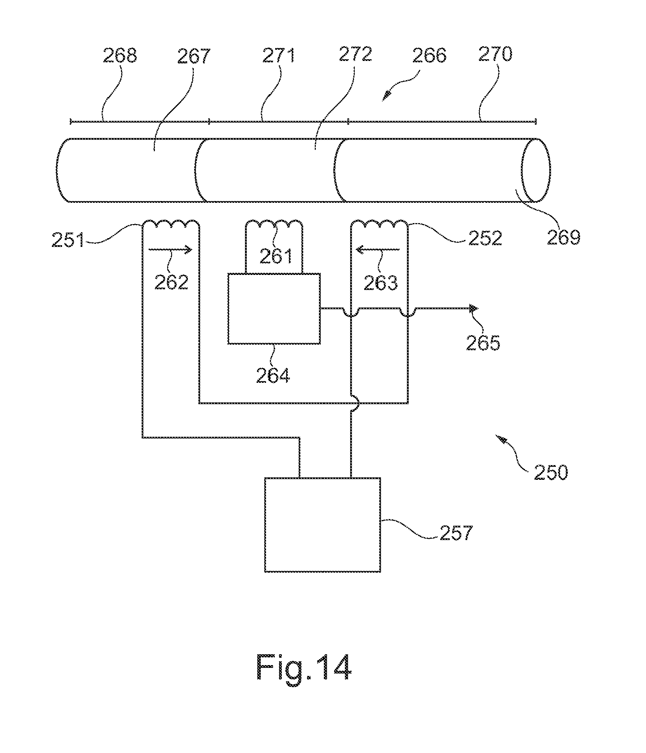

Fig. 14 shows a further sensor device 250 with a measuring circuit comprising a first coil 251, a second coil 252 and a third coil 261. The measuring circuit 250 may comprise further elements as shown and described for Fig. 13, such as a first resistor 253 and a second resistor 254, a first driver circuit 255 and a second driver circuit 256. The signal source 257 provides a signal to the first coil 250 and a signal to the second coil 252. The first coil 250 and the second coil 252 may be connected in a series connection, wherein the first coil 250 may provide a magnetic field in a first direction 262 and the second coil may provide a magnetic field in a second direction 263. The first direction 262 and the second direction 263 may be of opposite directions. The third coil 261 may be connected with a receiver or demodulator 264. The receiver 264 may provide a signal output 265 of the measurement circuit 250. With the measurement circuit 250 of Fig. 14 a position of an elongated object 266 comprising a first magnetic permeability 267 in a first portion 268 and comprising a second magnetic permeability 269 in a second portion 270. The first portion 268 may comprise a first hardening and the second portion 270 may comprise a second hardening of the shaft 266. A third portion 271 of the elongated object 266 may be a data transfer area 272, which may represent a transition portion of the shaft, where torque may be measured.

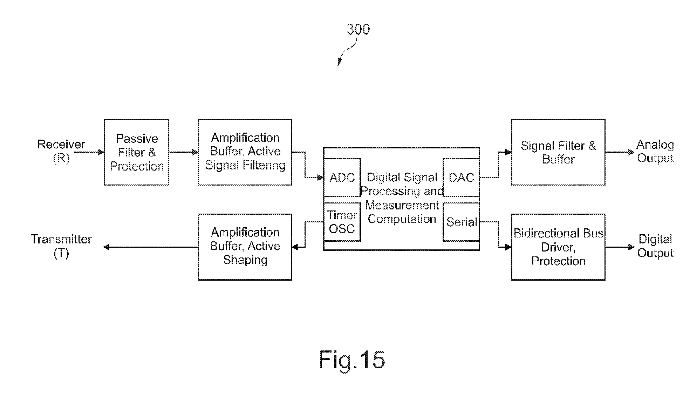

Fig. 15 shows a schematic block diagram of an exemplary embodiment for a single sensing channel operation. The sensor device 300 may be utilized for a Single Sensing Channel Absorption-D sensor system, which may be used to detect or measure movements or changes at an object, in particular a torque of an elongated object installed movable or installed fixed. The single sensing channel absorption D-sensor system may provide a measurement in one dimension (1D). Several single sensing channel absorption D-sensor systems may be combined in order to measure more than one axis or one than more dimension of the movement. For most applications, for example where the required signal resolution may exceed 16 measurement steps, like a 4 bit word, and where the distance between the T-Pad (signal coil or sensor coil) and the RD (Reference Device or elongated object) is more than a few centimeters, the digital processor device, may require additional peripheral components to built into the electronics, in particular the SCSP Electronics. The digital processor device may be also called MCU, or Single Chip Microprocessor, or RISC processor.

In the block diagram of Fig. 15 several functions and modules may be shown for the Single Channel Absorption-D SCSP Electronics. The schematic block diagram of a Single Channel Absorption-D processing electronics may comprise analog and serial digital signal interface functions. The sensor device 300 may comprise a receiver, which is connected to a passive filter and a protection unit. Furthermore, the sensor device 300 may comprise a transmitter which may be connected with an amplification unit, a buffer and a shaping signal unit. The sensor device 300 may comprise an further amplification, a buffer and an active filtering, which may be connected with the receiver coil over an passive filter and over a protection unit. Moreover, the sensor device 300 may comprise a unit for digital signal processing and measurement computation. Moreover the sensor device 300 may comprise a signal filter and a buffer which may be connected to an analog output of the sensor device 300. A serial unit may be connected with a bidirectional bus driver and a protection unit, which driver and unit may be connected with a digital output of the sensor device 300. Some of the shown schematic block modules may be a compilation of few passive components, such as RC filter and Protection functions for example.

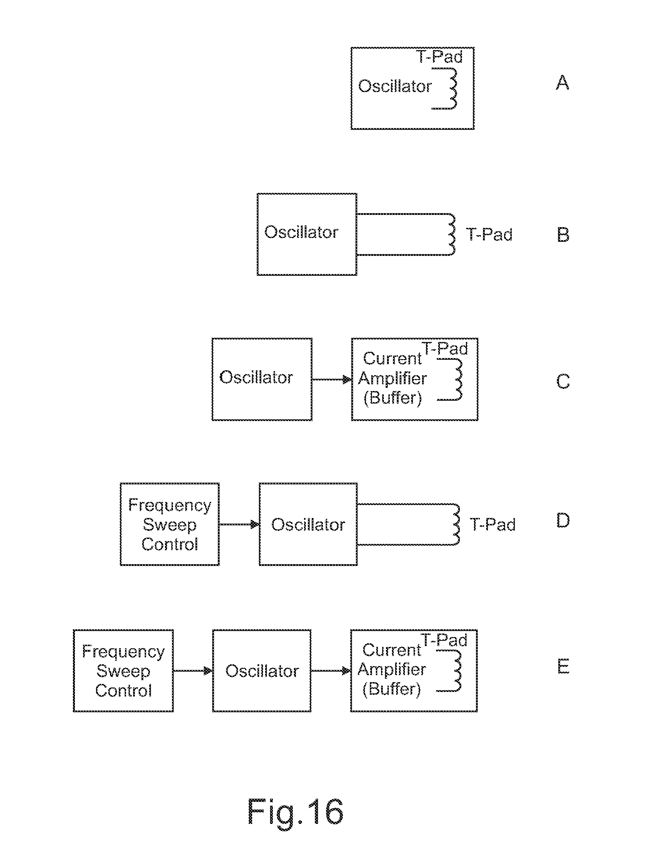

In Fig. 16 several configurations for an alternating magnetic field generator according to exemplary embodiments of the invention are shown. In particular a circuit with configuration A, B, C, D and E are shown, respectively.

The required alternating magnetic fields, which may be absorbed by a RD (RD: Reference Device) may be generated by an oscillator circuit and a coil, i.e. a T-Pad air-coil. Based on the targeted sensor system performances different designs may be chosen for combination of the oscillator and T-Pad (Transmitter Circuit). The different configurations may depend on Operating Temperature Range (OTR), expected sensor system stability over the OTR, electric supply current limits, supply voltage range for the Air-Coil driver circuit, targeted Operational Frequency (OF), the need to change (sweep) the Operational Frequency and/or a Sweep Range of the Operational Frequency.

The simplest and lowest cost design is shown in the configuration A. Configuration A may comprise an oscillator, which oscillator may comprise a sensor coil, also called T-Pad. In this example the air-coil from the T-Pad is part of an analog or digital component oscillator circuit. The resulting operational frequency will be optimized for the T-Pad air-coil used, i.e. means improved sensitivity performances.

Configuration B may comprise an oscillator, which may be connected with a sensor coil or a T-Pad. The configuration B may comprise a forced frequency driver circuit design whereby the T-Pad air-coil will be driven by an alternating signal (voltage / current) that may be generated by an oscillator which may have its own fixed and stable frequency. Improved performances may be provided with configuration B when the ambient temperature is changing and it increases the design freedom of the T-Pad air-coil.

Configuration C may comprise an oscillator, which oscillator may provide a signal to a current amplifier or to a buffer. The current amplifier or buffer may comprise a sensor coil or a T-Pad. For further improvements of the sensor systems sensitivity the T-Pad air-coil may be driven by an Emitter-follower (current driver / amplifier) for example.

Configuration D may comprise a frequency sweep control which may be connected with an oscillator, wherein the oscillator may be connected with a sensor coil or a T-Pad.

Configuration E may comprise a frequency sweep control, which may be connected with an oscillator. The oscillator may be connected with a current amplifier or a buffer, wherein the current amplifier or the buffer may comprise a sensor coil or a T-Pad.

In cases where it is necessary to change or fine-tune the operational frequency during the operation of the Absorption-D sensor system, then the chosen oscillator circuit may be switchable or tunable, which may be provided with configuration D or E. For simplifications the circuits shown do not include additional buffer stages and signal shaping components, which may be present in addition, but are not shown in Fig. 16. The exemplary embodiment shown in Fig. 1 to 16 may be combined with each other. Furthermore, a combination of a transversal movement and a rotational movement may be measured at the same time of the elongated object. Therefore a torque measurement may be provided as described and in addition a position measurement for measuring the position of the transversal movement of the elongated object may be provided. Thus a superposition of several movements, i.e. a combination of a rotational movement and transversal movement, may be present and may be measured.

It should be noted that the invention may be applied for any kind of torque measuring, in particular in dirt environments and on high precision applications.

The present invention may be utilized for power tools, such as fasteners, drills, impact tools, impulse tools and chiseling tools. Furthermore, the present invention may be utilized for automotive systems and transportation systems, i.e. for power steering, break systems, in particular for break systems in railroads, in avionics, in trucks, for input shafts, for output shafts, for gearboxes, for drive shafts and for crank shafts. Furthermore, the present invention may be utilized for power generating, i.e. for gas turbines, for wind turbines and for water power systems. The present invention may also be utilized in avionics, such as helicopter drive systems and jet engine control systems. Moreover, the present invention may be utilized in naval systems, such as ship propulsions. The invention may also be utilized for consumer articles or consumer goods, such as sport equipment, i.e. bicycles.

It is understood, that the present invention is not limited to the number of coils shown in the Figures. A person skilled in the art may also consider more than three coils for the present invention. According to the invention, it is possible to operate one or more coils in a medium, like oil, gas or water as described above. Therefore the present sensor device may operate under different medium without decreasing the preciseness of the torque measurement. Moreover, the self-calibration may also be performed in any medium. For example the first coil, the second coil, the third coil and further coils may operate in any medium, i.e. in oil. Moreover, one coil may measure the absorption energy of oil, i.e. as a first reference measurement. One other coil may measure the absorption energy of the material of the elongated object under torque stress and a further coil may measure an absorbed energy of the material of the elongated object at a non-stress torque portion of the elongated object, i.e. as a second reference measurement.

It is also understood that the geometry of the coils may be adaptable to the geometry of the shaft, i.e. when the shaft has a square diameter, the coils may also comprise a square diameter, respectively.

It is understood that the method according to the present invention is also included in the description in relating to the present Figures 1 to 15. With the exemplary embodiments it is possible to perform the method according to the present invention.

As a supplement, it should be noted that "comprising" does not exclude any other elements or steps and that "a" or "an" does not exclude a plurality. Furthermore it should be noted that characteristics or steps that were described with reference to one of the above embodiments may also be used in combination with other characteristics or steps of other above-described embodiments. The reference symbols in the claims should not be interpreted in a restrictive sense.

## Claims

1. Sensor device for measuring a torque of an elongated object (5), the sensor device (1) comprising:
a first coil (2);
a first resistor (7);
a power source (10);
an evaluation unit (13)
wherein the first coil (2) comprises a first coil terminal (3) and a second coil terminal (4);
wherein the first resistor (7) comprises a first resistor terminal (8) and a second resistor terminal (9);
wherein the power source (10) comprises a first power source terminal (11) and a second power source terminal (12);
wherein the evaluation unit (13) comprises a first evaluation unit terminal (15) and a second evaluation unit terminal (16);
wherein the first coil (2) is adapted to incorporate an elongated object (5);
wherein the first coil terminal (3) is connected with the first resistor terminal (8);
wherein the second coil terminal (4) is connected with the second power source terminal (12);
wherein the second resistor terminal (9) is connected with the first power source terminal (11);
wherein the first evaluation unit terminal (15) is connected with the first resistor terminal (8);
wherein the second evaluation unit terminal (16) is connected with the second resistor terminal (9);
wherein the evaluation unit (13) is adapted to measure an absorbed energy at the first resistor (7), which absorbed energy is depending on the torque of an elongated object (5).

2. Sensor device according to claim 1,
wherein the sensor device (1) comprises a second coil (22);
wherein the second coil (22) is adapted to incorporate an elongated object (5) and
wherein the second coil (22) is adapted to provide a reference measurement with respect to the first coil (2, 21).

3. Sensor device according to claim 2,
wherein the second coil (22) is connected with a second resistor (28) and
the evaluation unit (13) is adapted to measure an absorbed energy at the second resistor (7), which absorbed energy is depending on the torque of an elongated object (5).

4. Sensor device according to claim 2 or 3,
wherein the first coil (1, 21) and the second coil (22) are identical.

5. Sensor device according to one of the claims 2 to 4,
wherein an elongated object (5) comprises a first diameter (70) and a second diameter (71);
wherein the first coil (1, 22) is adapted to incorporate an elongated object (5) at the first diameter (70) and
wherein the second coil (22) is adapted to incorporate an elongated object (5) at the second diameter (71).

6. Sensor device according to one of the claims 2 to 5,
wherein an elongated object (5) comprises a first magnetic permeability and a second magnetic permeability,
wherein the first coil (2, 21, 61) is adapted to incorporate an elongated object (5) at the first magnetic permeability and
wherein the second coil (22, 62) is adapted to incorporate an elongated object (5) at the second magnetic permeability.

7. Sensor device according to one of the claims 1 to 6,
wherein at least one coil of the first coil (2, 21, 61) and the second coil (22, 62) is a coil with three dimensional windings.

8. Sensor device according to one of the claims 1 to 7,
wherein at least one coil of the first coil (2, 21, 61) and the second coil (22, 62) is a coil with two dimensional windings.

9. Sensor device according to one of the claims 1 to 8,
wherein at least one coil of the first coil (2, 21, 61) and the second coil (22, 62) is adapted to incorporate an elongated object (5) at a non-torque portion of an elongated object (5).

10. Sensor device according to one of the claims 1 to 9,
wherein the sensor device (1) comprises a third coil (23, 204);
wherein the third coil (23, 204) is adapted to incorporate an elongated object (5) and
wherein the third coil (23, 204) is adapted to provide a reference measurement.

11. Shaft arrangement comprising
the sensor device (1) according to any of the claims 1 to 10 and an elongated object (5).

12. Shaft arrangement according to claim 11, wherein the elongated object (5) is selected from a group of elongated objects (5), the group consisting of
an elongated object (5) comprising a magnetic permeability at an entire length of the elongated object (5);
an elongated object (5) comprising a first diameter (70) and a second diameter (71);
an elongated object (5) comprising a first magnetic permeability at a first portion of the elongated object (5) and a second magnetic permeability at a second portion of the elongated object (5);
an elongated object (5) comprising a first magnetic permeability at a first portion of the elongated object (5), a second magnetic permeability at a second portion of the elongated object (5) and a data transfer area at a third portion of the elongated object (5).

13. Shaft arrangement according to claim 11 or 12,
wherein the elongated object (5) comprises an input side and an output side,
wherein a first coil (2, 21, 61) is positioned between the input side and the output side,
wherein a second coil (22, 62) is positioned at a non-torque portion of the elongated object (5).

14. Method for measuring a torque of an elongated object (5) comprising:
generating a magnetic field and
measuring at least one absorbed energy in dependence of the torque of the elongated object (5).

15. Method according to claim 14, the method further comprises:
providing a reference measurement.
